# EUROPEAN PATENT APPLICATION

(11) **EP 4 682 113 A1**
(43) Date of publication of application: **21.01.2026**
(21) Application number: 25189512.4
(22) Date of filing: 15.07.2025
(51) Int. Cl.: C01G 53/506, H01M 4/36, H01M 4/525

(54) **GRADIENT-DOPED HIGH-NICKEL LAYERED OXIDE POSITIVE-ELECTRODE MATERIAL WITH HIGH-ENTROPY SURFACE AND MEDIUM-ENTROPY INTERIOR AND PREPARATION METHOD THEREOF**

(30) Priority: 17.07.2024 CN 202410959486
(71) Applicant: Tianli Lithium Energy Group Co., Ltd., Xinxiang City Henan 453000 (CN)
(72) Inventor: WANG, Ruiqing, Xinxiang City 453000 (CN); LI, Wen, Xinxiang City 453000 (CN); CUI, Xinwei, Xinxiang City 453000 (CN); LI, Xuan, Xinxiang City 453000 (CN); XU, Chunyang, Xinxiang City 453000 (CN); WANG, Zhuosen, Xinxiang City 453000 (CN)
(74) Representative: Hautier IP - MC/EP

(57) **Abstract**

The present invention belongs to the technical field of lithium-ion battery electrode materials, specifically relating to a gradient-doped high-nickel layered oxide positive-electrode material with high-entropy surface and medium-entropy interior and a preparation method thereof. According to the present invention, the preparation method of the gradient-doped high-nickel layered oxide positive-electrode material with high-entropy surface and medium-entropy interior, involves doping the surface of the material with five or more elements to form a surface high-entropy reconstruction layer, while the interior of the material is doped with four elements to form a medium-entropy doping structure. The high-entropy reconstruction layer on the surface utilizes the synergistic effects of multiple elements to form a superlattice structure on the surface, so as to reduce the valence state of surface nickel, thereby stabilizing the interfacial structure and minimizing side reactions with the electrolyte. Through this method, the cycling stability of nickel-rich layered oxide positive-electrode materials can be significantly improved. It is a simple in process, low-cost, easy-to-operate, and high-performance method with promising prospects for industrial production and application.

## Description

### TECHNICAL FIELD

The present invention belongs to the technical field of lithium-ion battery electrode materials, specifically relating to a gradient-doped high-nickel layered oxide positive-electrode material with high-entropy surface and medium-entropy interior and a preparation method thereof.

### BACKGROUND ART

Lithium-ion batteries have been widely used due to their advantages, such as high energy density, long cycle life, low self-discharge, and absence of memory effect. With the rapid development of electric vehicles and portable electronic devices, the current energy density of lithium-ion batteries can no longer meet the demand for long-range performance. Since the positive-electrode material of the lithium-ion battery is the primary factor limiting the improvement of battery energy density and achieving long-range performance, the adoption of high-energy-density positive-electrode materials has become the preferred approach for improving lithium-ion batteries.

In recent years, high-nickel layered oxide positive-electrode materials have rapidly become the preferred raw material for high-energy-density batteries due to their high reversible specific capacity. However, high-nickel layered oxide positive-electrode materials still face numerous challenges in the practical application process. For example, in the charging process, the unstable Ni⁴⁺ ions on the cathode surface can easily trigger side reactions; for example, the electrolyte decomposition, the metal ion dissolution, and the lattice oxygen release; for example, the lattice expansion or contraction during circulating process induces the formation of microcracks, thus exponentially increasing the interfacial area between the cathode and electrolyte, thereby allowing side reactions to penetrate deep into the material particles, and for example, the Ni²⁺ migration from the transition metal layer to the lithium layer during charge and discharge process, occupies lithium vacancies and forms cation mixing, thus causing a large number of lithium ion deactivation, and at the same time, the structural changes bring irreversible phase transitions and lattice oxygen release.

For the problems existing in the high-nickel layered oxide positive-electrode material, the common method in the prior art is to adopt two modes of surface coating and bulk-phase doping to realize the modification of the layered oxide synergistically. The surface modification (surface coating) can form a chemically inert protective layer, suppressing electrolyte decomposition and mitigating surface structural degradation, so as to improve the stability of the electrode-electrolyte interface effectively. The bulk-phase doping can modify the electronic structure outside the transition metals, strengthening the bond energy of the transition metal ion and oxygen bond, improving the electronic conductivity of the material, and suppressing the mixing of lithium and nickel, so as to alleviate crystal expansion and lattice oxygen release during the charging and discharging process. There are some reports in the prior art, for example, the Chinese Patent with the publication number of CN105118967A discloses a metal oxide coating modified and doped ternary positive-electrode material and the preparation method thereof, and the surface coating and bulk-phase doping modification of the high-nickel layered oxide of the lithium-ion battery enable the high-nickel layered oxide to have higher electronic conductivity and cycling stability. However, the patent fails to resolve the problem of microcrack formation caused by mismatched volume expansion between the coating layer and the bulk phase of the high-nickel layered oxide electrode.

Based on the problems existing in the prior art, the present invention adopts multiple metal sources as dopants for bulk-phase doping and surface reconstruction of high-nickel layered oxide positive-electrode materials (e.g., NCM). By optimizing the types of dopants, process parameters and specific implementation procedures, the electrochemical performance of the energy density and cycling stability of positive-electrode materials can be improved.

### SUMMARY

The present invention aims at solving the defects of the prior art and provides a gradient-doped high-nickel layered oxide positive-electrode material with high-entropy surface and medium-entropy interior and a preparation method thereof. By doping the surface of the material with five or more elements to form a surface high-entropy reconstruction layer, while the interior of the material is doped with four elements to form a medium-entropy doping structure. The high-entropy reconstruction layer on the surface can utilize the synergistic effects of multiple elements to form a superlattice structure on the surface, so as to reduce the valence state of surface nickel, thereby stabilizing the interfacial structure and minimizing side reactions with the electrolyte. In addition, the gradient structure of the surface high-entropy reconstruction layer and the interior medium-entropy doping structure can alleviate the lattice mismatch in the process of volume expansion and contraction, so as to reduce the formation of microcracks. Through this method, the cycling stability of nickel-rich layered oxide positive-electrode materials can be significantly improved. It is a simple in process, low-cost, easy-to-operate, and high-performance method with promising prospects for industrial production and application.

In order to achieve the above technical objective, the technical solution adopted by the present invention is as follows.

A preparation method of a gradient-doped high-nickel layered oxide positive-electrode material with high-entropy surface and medium-entropy interior, including the following steps:
1) mixing the high-nickel layered oxide precursor, metal doping precursor I, and lithium source uniformly in a predetermined ratio, then subjecting the mixture to primary sintering in a modified atmosphere within an atmosphere-controlled furnace, so as to obtain a doped high-nickel layered oxide positive-electrode material, and
2) mixing the high-nickel layered oxide positive-electrode material from step 1) with metal doping precursor II uniformly in a predetermined ratio, then subjecting the mixture to secondary sintering in a modified atmosphere within an atmosphere-controlled furnace, so as to obtain a gradient-doped high-nickel layered oxide positive-electrode material with high-entropy surface and medium-entropy interior.

Further, in step 1), the chemical formula of the high-nickel layered oxide precursor is Ni_{1-x-y-z}CoₓMn_{y}Al_{z}(OH)₂, wherein x>0, y>0, z>0, and 0.6≤(1-x-y-z)<1.

Further preferably, in step 1), the chemical formula of the high-nickel layered oxide precursor is Ni_{0.96}Co_{0.015}Mn_{0.015}Al_{0.01}(OH)₂.

Further, in step 1), the metal doping precursor I is one or more of a metal oxide, metal nitrate, metal sulfate, metal acetate, metal carbonate, or metal organic salt; preferably, in step 1), the metal is one or a combination of sodium, magnesium, potassium, calcium, scandium, titanium, vanadium, chromium, iron, copper, zinc, gallium, germanium, yttrium, zirconium, niobium, molybdenum, tantalum, tungsten, lanthanum, neodymium, cerium, or europium.

Further, in step 1), the lithium source is any one of lithium carbonate or lithium hydroxide.

More preferably, in step 1), the molar ratio of the high-nickel layered oxide precursor to the metal doping precursor I and the lithium source is 1:(0.00005-0.1):(1-1.2). Further, in step 1), the primary sintering includes a first-stage sintering and a second-stage sintering.

More preferably, the temperature of the first-stage sintering is 200°C-670°C, and the duration of the first-stage sintering is 1h-9h; the temperature of the second-stage sintering is 600°C-900°C, and the duration of the second-stage sintering is 6h-24h.

Further, in step 2), the metal doping precursor II is one or more of the metal oxide, metal nitrate, metal sulfate, metal acetate, metal carbonate, or metal organic salt; preferably, in step 2), the metal element is one or a combination of sodium, magnesium, potassium, calcium, scandium, titanium, vanadium, chromium, iron, copper, zinc, gallium, germanium, yttrium, zirconium, niobium, molybdenum, tantalum, tungsten, lanthanum, neodymium, cerium, or europium, and the metal element is different from the metal element selected for metal doping precursor I in step 1).

More preferably, in step 2), the molar ratio of the high-nickel layered oxide precursor to the metal doping precursor II is 1:(0.00005-0.1).

Further, in step 2), the temperature of the secondary sintering is 300°C-900°C, and the duration of the secondary sintering is 0.5h-15h.

Further, in step 1) and step 2), the modified atmosphere is an oxygen atmosphere, a nitrogen atmosphere, an ammonia atmosphere, a sulfur dioxide atmosphere, a hydrogen sulfide atmosphere, or a combination atmosphere of any two of these five gases, or a combination atmosphere of any three of these five gases, or a combination atmosphere of any four of these five gases, or a combination atmosphere of these five gases.

More preferably, when the modified atmosphere is a mixture of two gases, the ratio of the mixed gases is oxygen: other gas=(6-10):(1-4), wherein the other gas refers to nitrogen, ammonia, sulfur dioxide, or hydrogen sulfide.

Further, the gradient-doped high-nickel layered oxide positive-electrode material with high-entropy surface and medium-entropy interior prepared by the above surface modification method of the present invention exhibits excellent specific capacitance and charge-discharge performance, and can be used in the preparation of lithium-ion batteries.

Further, based on a general inventive concept, a use of the gradient-doped high-nickel layered oxide positive-electrode material with high-entropy surface and medium-entropy interior in the preparation of lithium-ion batteries is further provided by the present invention.

Further, a method for preparing lithium-ion batteries by using the gradient-doped high-nickel layered oxide positive-electrode material with high-entropy surface and medium-entropy interior is further provided by the present invention, specifically including the following steps:
a. placing a predetermined amount of gradient-doped high-nickel layered oxide positive-electrode material with high-entropy surface and medium-entropy interior, a conductive agent and a bonding agent in a container, so as to obtain a mixed powder;
b. adding solvent to the mixed powder from step a, performing ultrasonic dispersion at the power of 80W-100W for 8min-12min, then placing polytetrafluoroethylene magnetic stir bar in the container and stirring at 300r/min-400r/min for 8h-12h to uniformly disperse the high-nickel layered oxide positive-electrode material and the conductive agent, so as to obtain a mixed slurry, and
c. coating the mixed slurry from step b onto an aluminum foil (current collector), drying at 60°C-80°C for 8h-12h, then preparing the resultant into a button-type electrode sheets with a diameter of 12mm; subsequently, using the prepared electrode sheet as working electrode, a lithium metal sheet as the counter electrode, installing separator with high-nickel 4.3V electrolyte, so as to assemble a button cell, wherein the battery model is CR2032-type button cell.

Specifically, the conductive agent in step a is carbon black (Super-P), and the bonding agent is PVDF.

Specifically, the solvent is selected from one of deionized water, ethanol, and NMP.

Specifically, the mass of the solvent is 1-1.5 times that of the mixed powder.

Specifically, in the mixed slurry obtained in step b, the weight ratio of the gradient-doped high-nickel layered oxide positive-electrode material with high-entropy surface and medium-entropy interior, the conductive agent and the bonding agent is (16-18): 1: (1-2).

Specifically, the separator type is polypropylene membrane, and the electrolyte used in the battery primarily consists of: lithium salt (lithium hexafluorophosphate); preferably, the electrolyte is a 1M concentration of LiPF₆ in EC: EMC = 3:7vol% with the addition of 2wt% vinylene carbonate VC additive.

Specifically, in step c, the loading amount of the prepared mixed slurry on the electrode sheet is 1mg/cm²-5mg/cm².

Further, based on a general inventive concept, a lithium-ion battery prepared by using the gradient-doped high-nickel layered oxide positive-electrode material with high-entropy surface and medium-entropy interior is further provided in the present invention.

Compared with the prior art, the present invention has following advantages.
1. The preparation method described in the present invention achieves surface reconstruction through high-entropy doping on the layered oxide surface, constructing an ultrastable superlattice structure at the most vulnerable interface. This not only reduces side reactions but also prevents excessive doping from causing degradation in discharge specific capacity;
2. In the present invention, the medium-entropy doping is carried out in the bulk phase, the bond energy between transition metals and oxygen is enhanced effectively through multielement synergy, and the mixing of lithium and nickel is reduced, so as to mitigate unfavorable phase transitions and suppress lattice oxygen release.
3. In the present invention, by employing a gradient structure with surface high-entropy and interior medium-entropy, the lattice mismatch in the process of volume expansion and contraction can be alleviated and changed, so as to reduce the formation of microcracks in the circulation process.

### BRIEF DESCRIPTION OF THE DRAWINGS

FIG. 1 is a scanning electron microscope diagram of a high-nickel layered oxide positive-electrode material prepared in Example 1.
FIG. 2 is a scanning electron microscope diagram of a high-nickel layered oxide positive-electrode material prepared in Example 2.
FIG. 3 is a scanning electron microscope diagram of a high-nickel layered oxide positive-electrode material prepared in Example 3.
FIG. 4 is a cycle performance curve of Comparative Example 1, Comparative Example 2, Example 1, Example 2 and Example 3.
FIG. 5 is a rate performance curve of Comparative Example 1, Comparative Example 2, Example 1, Example 2 and Example 3.

### DETAILED DESCRIPTION OF EMBODIMENTS

The present invention is further described by the following examples in conjunction with the accompanying drawings. The present example is implemented on the premise of the technical solution of the present invention, and detailed embodiments and processes are given. However, the protection scope of the present invention is not limited to the following examples.

In the following examples, experimental methods without specified conditions were carried out under conventional conditions. All raw materials and reagents used were commercially available products unless otherwise noted.

Both the comparative examples and examples employed a high-nickel layered oxide precursor Ni_{0.96}Co_{0.015}Mn_{0.015}Al_{0.01}(OH)₂, provided by Henan Xinxiang Tianli Lithium Energy Co., Ltd., as a raw material. The preparation method thereof adopts the conventional method in the prior art, it is not the inventive focus of the present invention, and therefore, the details are not described herein again.

### Comparative Example 1

In Comparative Example 1, the precursor Ni_{0.96}Co_{0.015}Mn_{0.015}Al_{0.01}(OH)₂ and LiOH·H₂O were uniformly mixed in a molar ratio of 1:1.03, then two stages of sintering were performed in a pure oxygen atmosphere, wherein the temperature of the first-stage sintering was 400°C, and the duration of the first-stage sintering was 4h; the temperature of the second-stage sintering was 720°C, and the duration of the second-stage sintering was 10h, so as to obtain a LiNi_{0.96}Co_{0.015}Mn_{0.015}Al_{0.01}O₂ high-nickel layered oxide positive-electrode material.

### Comparative Example 2

A preparation method of a medium-entropy doped high-nickel layered oxide positive-electrode material was provided in Comparative Example 2, including the following specific steps.
1) The precursor Ni_{0.96}Co_{0.015}Mn_{0.015}Al_{0.01}(OH)₂, TiO₂ and LiOH·H₂O were uniformly mixed in a molar ratio of 1:0.003:1.03, then two stages of sintering were performed in an oxygen atmosphere, wherein the temperature of the first-stage sintering was 400°C, and the duration of the first-stage sintering was 4h; the temperature of the second-stage sintering was 720°C, and the duration of the second-stage sintering was 10h, so as to obtain a titanium-doped LiNi_{0.96}Co_{0.015}Mn_{0.015}Al_{0.01}O₂ high-nickel layered oxide positive-electrode material.
2) The high-nickel layered oxide positive-electrode material from step 1) and TiO₂ were uniformly mixed in a molar ratio of 1:0.006, then sintering was performed in an oxygen atmosphere, wherein the temperature of the sintering was 500°C, and the duration of the sintering was 4h, so as to obtain the medium-entropy doped LiNi_{0.96}Co_{0.015}Mn_{0.015}Al_{0.01}O₂ high-nickel layered oxide positive-electrode material.

### Example 1

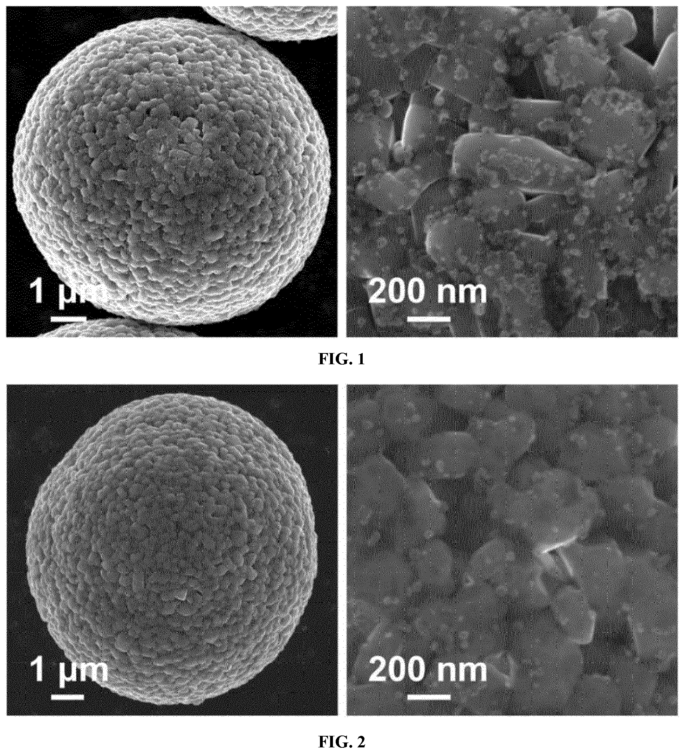

A preparation method of a gradient-doped high-nickel layered oxide positive-electrode material with high-entropy surface and medium-entropy interior was provided in Example 1, including the following specific steps.
1) The precursor Ni_{0.96}Co_{0.015}Mn_{0.015}Al_{0.01}(OH)₂, TiO₂ and LiOH·H₂O were uniformly mixed in a molar ratio of 1:0.003:1.03, then two stages of sintering were performed in an oxygen atmosphere, wherein the temperature of the first-stage sintering was 400°C, and the duration of the first-stage sintering was 4h; the temperature of the second-stage sintering was 720°C, and the duration of the second-stage sintering was 10h, so as to obtain a titanium-doped LiNi_{0.96}Co_{0.015}Mn_{0.015}Al_{0.01}O₂ high-nickel layered oxide positive-electrode material.
2) The high-nickel layered oxide positive-electrode material from step 1), TiO₂ and MoO₃ were uniformly mixed in a molar ratio of 1:0.004:0.002, then sintering was performed in an oxygen atmosphere, wherein the temperature of the sintering was 500°C, and the duration of the sintering was 4h, so as to obtain the surface high-entropy doped and interior medium-entropy doped LiNi_{0.96}Co_{0.015}Mn_{0.015}Al_{0.01}O₂ high-nickel layered oxide positive-electrode material. The SEM diagram of the surface high-entropy and interior medium-entropy doped high-nickel layered oxide positive-electrode material prepared in Example 1 is shown in FIG. 1. From FIG. 1, it can be seen that the spherical particles are complete and the surface of the material is uniformly coated with nanoparticles.

### Example 2

A preparation method of a gradient-doped high-nickel layered oxide positive-electrode material with high-entropy surface and medium-entropy interior was provided in Example 2, wherein Example 2 differed from Example 1 in step 2).

Specifically, in the step 2), the high-nickel layered oxide positive-electrode material from step 1), TiO₂ and WO₃ were uniformly mixed in a molar ratio of 1:0.004:0.002, then sintering was performed in an oxygen atmosphere, wherein the temperature of the sintering was 500°C, and the duration of the sintering was 4h, so as to obtain the surface high-entropy doped and interior medium-entropy doped LiNi_{0.96}Co_{0.015}Mn_{0.015}Al_{0.01}O₂ high-nickel layered oxide positive-electrode material. The SEM diagram of the surface high-entropy and interior medium-entropy doped high-nickel layered oxide positive-electrode material prepared in Example 2 is shown in FIG. 2. From FIG. 2, it can be seen that the spherical particles are complete and the surface of the material is uniformly coated with nanoparticles.

### Example 3

A preparation method of a gradient-doped high-nickel layered oxide positive-electrode material with high-entropy surface and medium-entropy interior was provided in Example 3, wherein Example 3 differed from Example 1 in step 2).

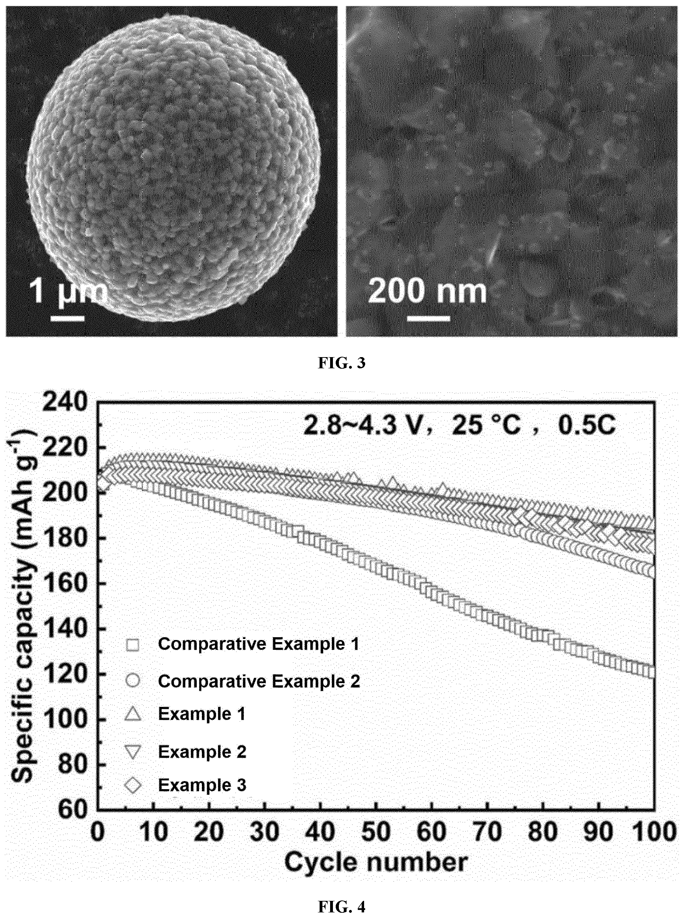

Specifically, in the step 2), the layered oxide cathode from step 1), TiO₂ and Nb₂O₅ were uniformly mixed in a molar ratio of 1:0.004:0.002, then sintering was performed in an oxygen atmosphere, wherein the temperature of the sintering was 500°C, and the duration of the sintering was 4h, so as to obtain the surface high-entropy doped and interior medium-entropy doped LiNi_{0.96}Co_{0.015}Mn_{0.015}Al_{0.01}O₂ high-nickel layered oxide positive-electrode material. The SEM diagram of the surface high-entropy and interior medium-entropy doped high-nickel layered oxide positive-electrode material prepared in Example 3 is shown in FIG. 3. From FIG. 3, it can be seen that the spherical particles are complete and the surface of the material is uniformly coated with nanoparticles.

### Example 4

A preparation method of a gradient-doped high-nickel layered oxide positive-electrode material with high-entropy surface and medium-entropy interior was provided in Example 4, including the following specific steps.
1) The precursor Ni_{0.96}Co_{0.015}Mn_{0.015}Al_{0.01}(OH)₂, TiO₂ and LiOH·H₂O were uniformly mixed in a molar ratio of 1:0.003:1.03, then two stages of sintering were performed in a mixed gas atmosphere with a molar ratio of oxygen to nitrogen of 8:2, wherein the temperature of the first-stage sintering was 400°C, and the duration of the first-stage sintering was 4h; the temperature of the second-stage sintering was 720°C, and the duration of the second-stage sintering was 10h, so as to obtain a titanium-doped LiNi_{0.96}Co_{0.015}Mn_{0.015}Al_{0.01}O₂ high-nickel layered oxide positive-electrode material.
2) The high-nickel layered oxide positive-electrode material from step 1), TiO₂ and MoO₃ were uniformly mixed in a molar ratio of 1:0.004:0.002, then sintering was performed in a mixed gas atmosphere with a molar ratio of oxygen to nitrogen of 8:2, wherein the temperature of the sintering was 500°C, and the duration of the sintering was 4h, so as to obtain the surface high-entropy doped and interior medium-entropy doped LiNi_{0.96}Co_{0.015}Mn_{0.015}Al_{0.01}O₂ high-nickel layered oxide positive-electrode material.

### Example 5

A preparation method of a gradient-doped high-nickel layered oxide positive-electrode material with high-entropy surface and medium-entropy interior was provided in Example 5, including the following specific steps.
1) The precursor Ni_{0.96}Co_{0.015}Mn_{0.015}Al_{0.01}(OH)₂, ZrO₂ and LiOH·H₂O were uniformly mixed in a molar ratio of 1:0.005:1.03, then two stages of sintering were performed in an oxygen atmosphere, wherein the temperature of the first-stage sintering was 400°C, and the duration of the first-stage sintering was 4h; the temperature of the second-stage sintering was 720°C, and the duration of the second-stage sintering was 10h, so as to obtain a zirconium-doped LiNi_{0.96}Co_{0.015}Mn_{0.015}Al_{0.01}O₂ high-nickel layered oxide positive-electrode material, and
2) the high-nickel layered oxide positive-electrode material from step 1), ZrO₂ and MoO₃ were uniformly mixed in a molar ratio of 1:0.002:0.001, then sintering was performed in an oxygen atmosphere, wherein the temperature of the sintering was 500°C, and the duration of the sintering was 4h, so as to obtain the surface high-entropy doped and interior medium-entropy doped LiNi_{0.06}Co_{0.015}Mn_{0.015}Al_{0.01}O₂ high-nickel layered oxide positive-electrode material.

### Application test

The products prepared in Examples 1-3 and Comparative Examples 1-2 were used to prepare lithium-ion batteries, and the specific preparation method was as follows.
a. The active material (the product prepared in Example 1, 2, 3 or Comparative Example 1, 2) was mixed with carbon black (Super-P, conductive agent, Shenzhen Kejing Zhida Technology Co., Ltd., CAS 1333-86-4) and bonding agent PVDF (polyvinylidene fluoride) at a mass ratio of 90:5:5, so as to obtain a mixed powder.
b. The mixed powder from step a was then added to a solvent (N-methylpyrrolidone, NMP), then the resultant was placed in a mixing container for uniform mixing, wherein the mass of the solvent was 1.5 times that of the mixed powder. The resultant was subjected to ultrasonic dispersion under the power of 100W for 8min, followed by stirring at 400r/min for 10h with placing polytetrafluoroethylene magnetic stir bar in the mixing container, to ensure homogeneous dispersion of the active material and carbon black (Super-P), so as to obtain the mixed slurry.
c. The mixed slurry from step b was coated onto an aluminum foil and dried at 80°C for 12h to prepare electrode sheets with a loading of 5mg/cm². Then, in an argon-filled glove box, the prepared electrode sheet was used as the working electrode, a lithium metal sheet as the counter electrode, and a high-nickel 4.6 V electrolyte (1M LiPF₆ in EC:EMC = 3:7vol% with 2wt% vinylene carbonate VC additive) with a polypropylene separator was employed to assemble a button cell, wherein the battery model was CR2032-type button cell, and a constant current charge-discharge test was performed.

The cycle performance of the products prepared in Examples 1-3 and Comparative Example 1-2 was compared. The cycle performance test was conducted by charging and discharging the assembled CR2032 button cell at a constant current within the range of 3V-4.3V. The results are shown in Table 1 and FIG. 4, wherein the cycle performance curve at a rate of 0.5C is shown in FIG. 4, and the corresponding coulombic efficiency after 100 cycles at the rate of 0.5C in FIG. 4 is shown in Table 1.

**Table 1. Initial specific capacity at 0.5C and capacity retention after 100 cycles for Comparative Example 1, Comparative Example 2, Example 1, Example 2, and Example 3.**

| Sample | First Discharge Specific Capacity (mAh/g) | Capacity Retention after 100 Cycles |
|---|---|---|
| Comparative Example 1 | 203.9mAh/g | 59.2% |
| Comparative Example 2 | 205. 1mAh/g | 80.5% |
| Example 1 | 206.7mAh/g | 89.8% |
| Example 2 | 205.9mAh/g | 87.3% |
| Example 3 | 204.2mAh/g | 86.2% |

As can be seen from Table 1 and FIG. 4, in Comparative Example 1, the first-cycle discharge specific capacity is 203.9mAh/g and the capacity retention after 100 cycles is 59.2%. In Comparative Example 2, the initial discharge specific capacity is not significantly changed with respect to Comparative Example 1, but the capacity retention after 100 cycles is increased to 80.5%.

Examples 1-3 show nearly identical initial discharge specific capacities compared to Comparative Example 1 and Comparative Example 2. After 100 cycles, the 100-cycle capacity retentions of Examples 1-3 are all higher than those of Comparative Example 1 and Comparative Example 2. The above results demonstrate that the high-entropy and medium-entropy gradient doping method in the present invention can improve the cycling stability of LiNi_{0.96}Co_{0.015}Mn_{0.015}Al_{0.01}O₂ high-nickel layered oxide.

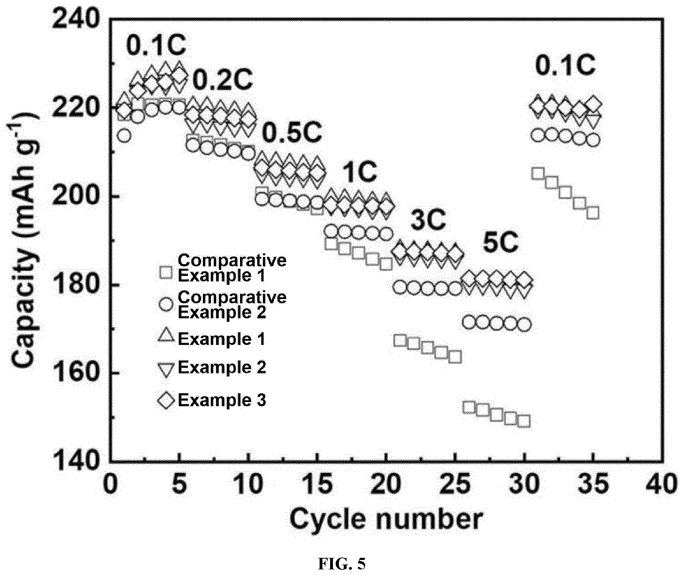

The rate performance of the products prepared in Examples 1-3 and Comparative Examples 1-2 was compared. The rate performance test was conducted by charging and discharging the assembled CR2032 button cell at a constant current at different rates within the range of 3V-4.3V, and the results are shown in FIG. 5.

Compared with Comparative Example 1 and Comparative Example 2, Examples 1-3 exhibit improved discharge specific capacities at different rates. In particular, at a high rate of 5C, the discharge specific capacity of Examples 1-3 is significantly higher than that of Comparative Example 1 and Comparative Example 2. The above results demonstrate that the high-entropy and medium-entropy gradient doping method in the present invention can improve the rate performance of the LiNi_{0.96}Co_{0.015}Mn_{0.015}Al_{0.01}O₂ high-nickel layered oxide.

In summary, the preparation method of the gradient-doped high-nickel layered oxide positive-electrode material with high-entropy surface and medium-entropy interior in the present invention improves the cycle stability of the high-nickel layered oxide; and the method has good application value and is suitable for industrialized popularization and application.

The basic principles and main features of the present invention, as well as the advantages of the present invention, are shown and described above. It should be understood by those skilled in the art that the present invention is not limited by the above-mentioned examples, the above-mentioned examples and the description are merely illustrative of the principle of the present invention. The present invention may further have various changes and improvements without departing from the spirit and scope of the present invention, and these changes and improvements all fall within the scope of the present invention as claimed. The scope of protection of the present invention is defined by the appended claims and their equivalents.

## Claims

1. A preparation method of a gradient-doped high-nickel layered oxide positive-electrode material with high-entropy surface and medium-entropy interior, **characterized by** comprising following steps:
1) mixing a high-nickel layered oxide precursor, a metal doping precursor I, and a lithium source uniformly in a predetermined ratio, then subjecting the mixture to a primary sintering in a modified atmosphere within an atmosphere-controlled furnace, so as to obtain a doped high-nickel layered oxide positive-electrode material, and
2) mixing the high-nickel layered oxide positive-electrode material from the step 1) with a metal doping precursor II uniformly in a predetermined ratio, then subjecting the mixture to a secondary sintering in a modified atmosphere within an atmosphere-controlled furnace, so as to obtain the gradient-doped high-nickel layered oxide positive-electrode material with high-entropy surface and medium-entropy interior.

2. The preparation method according to claim 1, wherein a chemical formula of the high-nickel layered oxide precursor in the step 1) is Ni_{1-x-y-z}CoₓMn_{y}Al_{z}(OH)₂, where x>0, y>0, z>0, 0.6≤(1-x-y-z)<1.

3. The preparation method according to claim 1, wherein in the step 1), the metal doping precursor I is one or more of a metal oxide, a metal nitrate, a metal sulfate, a metal acetate, a metal carbonate, and a metal organic salt; in the step 1), the metal is one or a combination of sodium, magnesium, potassium, calcium, scandium, titanium, vanadium, chromium, iron, copper, zinc, gallium, germanium, yttrium, zirconium, niobium, molybdenum, tantalum, tungsten, lanthanum, neodymium, cerium, and europium.

4. The preparation method according to claim 1, wherein in the step 1), the lithium source is one of a lithium carbonate and a lithium hydroxide, and in the step 1), a molar ratio of the high-nickel layered oxide precursor to the metal doping precursor I and the lithium source is 1: (0.00005-0.1): (1-1.2).

5. The preparation method according to claim 1, wherein in the step 1), the primary sintering comprises a first-stage sintering and a second-stage sintering, a temperature of the first-stage sintering is 200°C-670°C, and a duration of the first-stage sintering is 1h-9h; a temperature of the second-stage sintering is 600°C-900°C, and a duration of the second-stage sintering is 6h-24h.

6. The preparation method according to claim 1, wherein in the step 2), the metal doping precursor II is one or more of a metal oxide, a metal nitrate, a metal sulfate, a metal acetate, a metal carbonate, and a metal organic salt; in the step 2), the metal is one or a combination of sodium, magnesium, potassium, calcium, scandium, titanium, vanadium, chromium, iron, copper, zinc, gallium, germanium, yttrium, zirconium, niobium, molybdenum, tantalum, tungsten, lanthanum, neodymium, cerium, or europium.

7. The preparation method according to claim 1, wherein in the step 2), a molar ratio of the high-nickel layered oxide precursor to the metal doping precursor II is 1:(0.00005-0.1).

8. The preparation method according to claim 1, wherein in the step 2), a temperature of the secondary sintering is 300°C-900°C, and a duration of the secondary sintering is 0.5h-15h.

9. A gradient-doped high-nickel layered oxide positive-electrode material with high-entropy surface and medium-entropy interior, prepared by the preparation method according to any one of claims 1-8.

10. Use of the gradient-doped high-nickel layered oxide positive-electrode material with high-entropy surface and medium-entropy interior according to claim 9 in a preparation of a lithium-ion battery.
